# EUROPÄISCHE PATENTSCHRIFT

(11) **EP 1 388 472 B1**
(45) Veröffentlichungstag und Bekanntmachung des Hinweises auf die Patenterteilung: **08.12.2004**
(21) Anmeldenummer: 03015240.9
(22) Anmeldetag: 05.07.2003
(51) Int. Cl.: B60T 8/00

(54) **Betriebsverfahren für ein Fahrzeug-Lenksystem**
Operating method for a motor vehicle steering system
Procédé d'opération d'un système de direction pour un véhicule automobile

(30) Priorität: 08.08.2002 DE 10236330
(43) Veröffentlichungstag der Anmeldung: 11.02.2004
(73) Patentinhaber: Bayerische Motoren Werke Aktiengesellschaft, 80809 München (DE)
(72) Erfinder: Barz, Michael, 85258 Weichs (DE); Fleck, Reidar, 80995 München (DE)

(56) Entgegenhaltungen:
- EP-A- 0 999 117
- DE-A- 4 419 131
- DE-A- 10 104 194
- US-A- 5 089 967

## Beschreibung

Die Erfindung betrifft ein Betriebsverfahren für ein Lenksystem eines mehrspurigen Fahrzeugs, das unabhängig von einem vom Fahrzeug-Fahrer mit seiner Lenkhandhabe vorgegebenen Lenkwinkel mittels eines Aktuators oder dgl. einen Lenkeinschlag zur Kompensation eines Stör-Giermomentes erzeugen kann, das durch unterschiedliche Längskräfte an den Rädern der beiden Fahrzeugseiten, insbesondere einen µ-split-Bremsvorgang, hervorgerufenen wurde, und wobei das Fahrzeug mit einem Bremssystem oder einem Antriebssystem ausgerüstet ist, mit dem durch ein gezieltes Anlegen einer Längskraft an das oder die Fahrzeug-Räder zumindest einer Fahrzeug-Seite ebenfalls ein auf das Fahrzeug einwirkendes Giermoment erzeugbar ist.

Grundsätzlich bekannt (bspw. unter dem Namen "ESP") sind die letztgenannten Vorrichtungen, mit Hilfe derer mehrspurige Kraftfahrzeuge, die aufgrund widriger Randbedingungen, bspw. aufgrund eines Übersteuervorgangs bei Kurvenfahrt, zum Ausbrechen neigen, stabilisiert werden können. Ein entsprechendes sog. Stör-Giermoment, welches das Fahrzeug dann erfährt, kann bekanntermaßen kompensiert werden, indem die an die Räder der rechten und linken Fzg.-Seite angelegten Längskräfte geeignet unterschiedlich bemessen werden, was bspw. dadurch erfolgen kann, dass einseitig die Vortriebskraft reduziert und/oder einseitig eine Bremskraft angelegt wird. Selbstverständlich ist es dabei erforderlich, das auf das Fahrzeug einwirkende Giermoment geeignet festzustellen bzw. zu ermitteln.

Ein sog. Stör-Giermoment kann aber auch aus einem Bremsvorgang oder einem Beschleunigungsvorgang auf einer "inhomogenen" Fahrbahn (sog. µsplit-Fahrbahn) resultieren, wobei sich der Reibwert zwischen den FahrzeugRädern bspw. der rechten Fahrzeug-Seite und des dortigen Fahrbahn-Bereichs erheblich vom Reibwert zwischen den Fzg.-Rädern der linken Fzg.-Seite und der dortigen Fahrbahn unterscheidet. Wird das Fahrzeug auf einer derartigen µ-split-Fahrbahn bspw. beschleunigt, d.h. werden entsprechende Längskräfte an die Antriebs-Räder des Fahrzeugs beidseitig in gleicher Höhe angelegt, so erfährt das Fahrzeug zwangsläufig ein sog. Stör-Giermoment und neigt folglich zum Schleudern. Wie bekannt kann dies dadurch kompensiert werden, dass die an die Räder der rechten und linken Fzg.-Seite angelegten Längskräfte geeignet unterschiedlich bemessen werden, was bspw. dadurch erfolgen kann, dass einseitig die Vortriebskraft reduziert und/oder einseitig eine Bremskraft angelegt wird. Entsprechendes gilt selbstverständlich für Bremsvorgänge auf µ-split-Fahrbahnen. Selbstverständlich ist es auch hierbei erforderlich, das auf das Fahrzeug einwirkende Giermoment und somit das Stör-Giermoment geeignet festzustellen bzw. zu ermitteln.

Einem durch irgendwelche Störeinflüsse auf ein mehrspuriges Kraftfahrzeug einwirkenden sog. Stör-Giermoment kann aber nicht nur durch einseitiges oder allgemein asymmetrisches Anlegen von Längskräften an ein Fzg.-Rad oder beide (allg. mehrere) Fzg-Räder entgegengewirkt werden, sondern auch durch einen geeigneten Lenkeinschlag von lenkbaren Fzg.-Rädern. Ein entsprechender Lenkeinschlag kann vom Fahrer selbst erzeugt werden (sog. "Gegenlenken"), er kann bekannterweise jedoch auch automatisch, d.h. selbsttätig erzeugt werden, wenn das Fahrzeug mit einem entsprechenden Lenk-System ausgerüstet ist. Bekannt sind in diesem Zusammenhang bspw. die sog. Hinterrad-Lenkungen von bspw. Personenkraftwagen, daneben aber auch Lenksysteme, die einen Zugriff oder eine Einflussnahme bspw. einer elektronischen Steuereinheit auf den vom Fzg.-Fahrer gewünschten bzw. vorgegebenen Lenkwinkel der (üblichen) lenkbaren (Vorder-)Räder des Fahrzeugs ermöglichen. Beispiele hierfür sind die sog. steer-by-wire-Systeme sowie Überlagerungs-Lenksysteme (siehe z.B. DE 44 19 131). Während bei erstgenannten bekanntermaßen der Lenkwinkel vollständig von einem geeigneten sog. Aktuator (= Stellmotor oder dgl.), der hierzu von einer elektronischen Steuereinheit auch unter Berücksichtigung der Vorgaben des Fzg.-Fahrers geeignet angesteuert wird, eingestellt wird, wird bei letztgenannten der vom Fahrer vorgegebene Lenkwinkel zwar noch direkt mechanisch an die lenkbaren Fzg.-Räder weitergeleitet, jedoch kann diesem Lenkwinkel ein zusätzlicher Lenkwinkel (additiv) überlagert werden. Dieser sog. Überlagerungs-Lenkwinkel kann bspw. in einem geeigneten Übertagerungsgetriebe mittels eines bevorzugt von einer elektronischen Steuereinheit geeignet angesteuerten Aktuators aufgebracht werden.

Wird nun eine der geschilderten Störungskompensationen, wie bspw. die Giermomentenkompensation beim Bremsen auf inhomogenen Fahrbahnen (µ-split) oder eine sog. Lastwechselkompensation mit einem geschilderten sog. aktiven Lenksystem durchgeführt, welches mittels einer Steuereinheit den tatsächlichen Lenkwinkel der lenkbaren Fzg.-Räder hierfür geeignet verändert, so kann es zumindest theoretisch dazu kommen, dass der besagte Aktuator dieses Lenksystems einen Lenkwinkel an den lenkbaren Rädern einstellt und danach auf Grund eines irgendwie gearteten Fehlers abschalten muss, ohne dass dieser eingestellte Winkel wieder zurückgestellt werden kann. Dies kann insbesondere bei den genannten Überlagerungs-Lenkungen auftreten, da diese zumeist nicht (mehrfach) redundant ausgelegt werden, nachdem bei diesen die Anforderungen bezüglich der Systemsicherheit aufgrund der stets vorhandenen direkten mechanischen Verbindung zwischen den lenkbaren Rädern und dem Lenkrad (bzw. allg. der Lenkhandhabe) des Fahrers geringer sind als bei den reinen steer-by-wire-Systemen, bei denen eine derartige mechanische Verbindung überhaupt nicht vorliegt.

In der weiteren Beschreibung lediglich auf ein Überlagerungs-Lenksystem Bezug nehmend, dadurch jedoch die vorliegende Erfindung nicht auf ein derartiges Lenksystem beschränkend, könnte ein Ausfall dieses Lenksystems zur Folge haben, dass bspw. beim Bremsen auf einer µ-split-Fahrbahn ein Lenkwinkel bzw. Überlagerungs-Winkel an den lenkbaren Rädern eingestellt wird, um das aus diesem sog. "µ-split-Bremsvorgang" resultierende Stör-Giermoment zu kompensieren, wodurch das Fahrzeug erwünschtermaßen zunächst richtungsstabil verzögert wird. Beim einem besagten Ausfall des Überlagerungs-Lenksystems, so bspw. des Aktuators selbst, bleibt nun dieser einmal eingestellte Überlagerungs-Winkel an den gelenkten Rädern bestehen. Ändern sich daraufhin die Reibwertverhältnisse zwischen der Fahrbahn und den Rädern oder wird die genannte µ-split-Bremsung abgebrochen oder unterbrochen, so wird das Fahrzeug aufgrund dieses beibehaltenen Lenk-Winkels (nämlich des Überlagerungs-Winkels) für den Fahrer unerwartet seine Fahrtrichtung ändern.

Grundsätzlich kann der Fahrer zwar hierauf reagieren, nachdem das Lenksystem weiterhin Lenkeingriffe des Fahrers an den lenkbaren Rädern zulässt und umsetzt, nichtsdestotrotz wird der Fahrer jedoch verunsichert sein, weshalb er denn nun plötzlich die Lenkung betätigen bzw. das Lenkrad verdrehen muss, um die gewünschte und bereits durch eine entsprechende Lenkradstellung vorgegebene Fahrtrichtung beizubehalten.

Eine Abhilfemaßnahme für diese geschilderte Problematik bezüglich eines Betriebsverfahrens nach dem Oberbegriff des Anspruchs 1 aufzuzeigen, ist Aufgabe der vorliegenden Erfindung.
Die Lösung dieser Aufgabe ist dadurch gekennzeichnet, dass im Falle eines Ausfalls des Aktuators nach Einleitung eines ein Stör-Giermoment kompensierenden Lenkeinschlages, der bei ausgefallenem Aktuator erhalten bleibt, die folgenden Schritte aufeinanderfolgend durchgeführt werden:
1) es wird das durch den Aktuator vor seinem Ausfall aufgrund des initiierten Lenkeinschlags erzeugte sog. Aktuator-Giermoment berechnet,
2) es wird ein auf das Fahrzeug einwirkendes und dieses Aktuator-Giermoment kompensierendes Gegen-Giermoment durch selbsttätiges Aufbringen einer asymmetrischen Rad-Längskraft erzeugt,
3) das Gegen-Giermoment wird geeignet langsam abgebaut, um dem Fahrer zu ermöglichen, das dann aufgrund des noch vorliegenden Lenkeinschlages auftretende Giermoment durch einen mit seiner Lenkhandhabe erzeugten Lenkeinschlag auszugleichen.

Vorteilhafte Weiterbildungen sind Inhalt der Unteransprüche, ferner ist in Anspruch 5 ein Fahrzeug-Lenksystem zur Durchführung des erfindungsgemäßen Betriebsverfahrens angegeben, das sich durch eine elektronische Steuereinheit auszeichnet, die die genannte Ermittlung des Aktuator-Giermomentes sowie den Aufbau und Abbau des genannten Gegen-Giermoments durch geeignete Ansteuerung geeigneter Stellglieder veranlasst.

An dieser Stelle sei ausdrücklich darauf hingewiesen, dass der Begriff des "Aktuators" in einem Fahrzeug-Lenksystem äußerst allgemein zu verstehen ist, d.h. mit diesem Begriff ist in seiner Gesamtheit ein Lenksystem oder ein Bestandteil desselben zu verstehen, das oder der durch einen Lenkeingriff lenkbare Fzg.-Räder derart einschlägt, dass ein irgendwie geartetes, auf das Fahrzeug einwirkendes Stör-Giermoment durch diesen Lenk-Einschlag kompensiert, d.h. aufgehoben werden kann. Unter dem Aktuator kann also bspw. ein geeigneter Stellmotor, aber auch ein Getriebe oder eine Ansteuerung für diese bzw. allgemein für ein entsprechendes Lenkungselement verstanden werden. Ferner ist selbstverständlich erforderlich, dass zur Durchführung des erfindungsgemäßen Verfahrens dieser Aktuator (bzw. allg. dieses zur Kompensation von Stör-Giermomenten vorgesehene Lenksystem) auf seine Funktionstüchtigkeit hin überwacht wird, d.h. bevorzugt eine geeignete elektronische Steuereinheit muss einen Ausfall dieses besagten Lenksystems bzw. des genannten Aktuators selbstverständlich erst einmal feststellen, ehe das erfindungsgemäße Verfahren in Gang gesetzt werden kann.

Erfindungsgemäß soll nun bei einem Ausfall bspw. des Aktuators des Überlagerungs-Lenksystems oder dgl., der oder das zunächst einen Lenkeinschlag zur Kompensation eines sog. Stör-Giermoments hervorgerufen hat, ein auf das Fahrzeug einwirkendes Gegen-Giermoment bspw. über die Fzg.-Bremsanlage erzeugt werden. Dieses Gegen-Giermoment soll dabei betragsmäßig ebenso groß sein wie das und entgegengesetzt orientiert sein zu dem zuvor vom Aktuator aufgrund des hervorgerufenen Lenkeinschlags erzeugten sog. Aktuator-Giermoment. Entsprechend dem Oberbegriff des Anspruchs 1 wurde dieses aufgrund unterschiedlicher Längskräfte an den Rädern der beiden Fzg.-Seiten und insbesondere beim Befahren einer µ split-Fahrbahn benötigt, weshalb es nun vorrangig ist, dieses auf das Fahrzeug einwirkende Aktuator-Giermoment schnellstmöglich abzubauen, da üblicherweise eine u-split-Fahrbahn bzw. ein entsprechender Fahrzustand lediglich äußerst kurzzeitig anhält. Mit diesem ersten erfindungsgemäßen Schritt wird somit vermieden, dass sobald das Fahrzeug die sog. u-split-Fahrbahn verlässt, der Kurs des Fahrzeugs allein vom noch vorhandenen und durch den Aktuator hervorgerufenen Lenkeinschlag bestimmt wird. Vielmehr wirkt erfindungsgemäß zusätzlich ein diesen Lenkeinschlag kompensierendes Giermoment, nämlich das sog. Gegen-Giermoment auf das Fahrzeug ein, weshalb sich dieses nun entsprechend dem vom Fahrer gewünschten Kurs fortbewegt.

Mit unerwarteten blitzartigen Kursabweichungen wird der Fahrer bis zu diesem Zeitpunkt oder Verfahrensschritt somit nicht konfrontiert, wobei es zunächst - wie auch angegeben wurde - selbstverständlich erforderlich ist, das vom Aktuator vor dessen Funktions-Ausfall aufgebrachte sog. Aktuator-Giermoment in einem ersten Verfahrensschritt zu ermitteln, ehe ein entsprechendes Gegen-Giermoment durch selbsttätiges Aufbringen einer asymmetrischen Rad-Längskraft in einem zweiten Verfahrensschritt erzeugt wird. Dabei steht der Begriff "asymmetrische Rad-Längskraft" für unterschiedliche Rad-Längskräfte an den beiden Seiten des mehrspurigen Fahrzeugs, seien es nun Vortriebskräfte oder Bremskräfte, wobei bekanntermaßen mittels derartiger asymmetrischer Längskräfte ein auf das Fahrzeug einwirkendes Giermoment erzeugt werden kann.

In einem sich hieran anschließenden dritten Verfahrensschritt wird nun das soweit aufgebrachte Gegen-Giermoment geeignet langsam abgebaut, um es dabei dem Fahrer zu ermöglichen, das dann aufgrund des noch vorliegenden vom Aktuator erzeugten Lenkeinschlages wirkende bzw. wirksam werdende Giermoment durch einen mit seiner Lenkhandhabe erzeugten Lenkeinschlag auszugleichen. Wie aus der bisherigen Schilderung hervorgeht, herrschte nach Durchführung des zweiten Verfahrensschrittes ein quasistabiler Zustand, in dem sich das Fahrzeug jedenfalls dann, wenn das ursprüngliche Störgiermoment, das den vom Aktuator erzeugten Lenkeinschlag hervorgerufenen hat, nicht mehr vorliegt, da kein entsprechender Störeinfluss mehr vorhanden, nämlich bspw. die µ-split-Fahrbahn überwunden ist, und kein neuer Störeinflüsse hinzugekommen ist, exakt auf dem vom Fahrer gewünschten Kurs bewegt, da dann die Wirkung des noch vorliegenden, ursprünglich vom Aktuator erzeugten Lenkeinschlages durch das erfindungsgemäß angelegte Gegen-Giermoment aufgehoben wird. Jedoch soll dieser quasistationäre Zustand kein Dauerzustand bleiben, weshalb nun in einem dritten Verfahrensschritt dieses Gegen-Giermoment relativ langsam abgebaut wird. Dies hat zur Folge, dass der vom Aktuator erzeugte und zunächst noch vorhandene Lenkeinschlag das Fahrzeug vom gewünschten Kurs abbringen würde, jedoch kann dies dann vom Fahrer einfach verhindert werden, indem er entsprechend gelenkt, wofür er aufgrund des langsamen Abbaus des Gegen-Giermoments ausreichend Zeit hat. Überstürzte Reaktionen des Fahrers auf schlagartig sich ändernde Randbedingungen sind somit nicht erforderlich.

Ist das besagte Gegen-Giermoment vollständig abgebaut, so ist nach dieser vollendeten Kompensation auch der von der Störungskompensation, d.h. vom Aktuator oder dgl. eingestellte Rad-Lenkwinkel wieder zurückgenommen, wodurch keine Gefahr einer plötzlichen Kursänderung mehr besteht. Lediglich die Lenkhandhabe des Fahrers (so insbesondere ein Lenkrad) befindet sich nach Durchführung des dritten Schrittes des erfindungsgemäßen Verfahrens bei Geradeausfahrt des Fahrzeugs in einer von der Mittelstellung (d.h. dem Lenkwinkel 0°) abweichenden Stellung, nachdem der vom Aktuator erzeugte und von diesem nicht rückgängig gemachte Lenkeinschlag eben seitens des Fahrers mit seiner Lenkhandhabe zurückgestellt werden musste. Vorteilhafterweise wird jedoch der Fahrer gerade durch diese von der Mittelstellung abweichende Stellung der Lenkhandhabe bzw. des Lenkrads darauf hingewiesen, dass ein Fehler im Lenksystem aufgetreten ist. Weitere Hinweise bzw. Warnungen, die auf akustischem und/oder optischen Wege erfolgen können (und auf die hier nicht näher eingegangen werden soll) können im übrigen von einer die geschilderten Verfahrensschritte steuernden elektronischen Überwachungseinheit ausgegeben werden.

Bislang wurde ausgeführt, dass ein bzw. das auf das Fahrzeug erfindungsgemäß einwirkende sog. Gegen-Giermoment durch selbsttätiges Aufbringen einer asymmetrischen Rad-Längskraft erzeugt werden kann, wofür beispielshalber an die Rädern der einen Seite des mehrspurigen, insbesondere zweispurigen Fahrzeugs eine höhere Bremskraft angelegt werden kann als an die Räder auf der anderen Fahrzeug-Seite. Grundsätzlich kann jedoch eine jeweils gewünschte Rad-Längskraft entweder durch Abbremsen oder durch Beschleunigen des jeweiligen Rades hervorgerufen werden. Wesentlich ist nur, dass die Verteilung der Längskräfte zwischen der linken und der rechten Fahrzeugseite ungleich erfolgt, wobei bezogen auf eine bestimmte Fzg.-Seite die jeweilige Rad-Längskraft alternativ an eines oder an beide (bzw. allgemein mehrere) Räder einer Fahrzeug-Seite angelegt werden kann. Soll dabei ein betragsmäßig besonders großes Giermoment erzeugt werden, so kann an das oder die Räder der einen Fahrzeug-Seite eine Rad-Längskraft angelegt werden, die einer ebenfalls zur Durchführung des erfindungsgemäßen Verfahrens an das oder die Räder der anderen Fahrzeug-Seite angelegten Rad-Längskraft entgegengerichtet ist, d.h. das oder die Räder der eine Fzg.-Seite wird/werden abgebremst und das oder die Räder der eine Fzg.-Seite wird/werden beschleunigt.

Wenngleich das soweit beschriebene Verfahren innerhalb einer relativ kurzen Zeitspanne durchgeführt und somit abgeschlossen werden kann, so ist doch nicht auszuschließen, dass sich während dieser soweit beschriebenen Verfahrensschritte irgendwelche Randbedingungen ändern, die ihrerseits das tatsächlich auf das Fahrzeug einwirkende Giermoment beeinflussen. Beispielsweise kann der Fahr-Kurs des Fahrzeugs plötzlich durch angreifenden Seitenwind abgefälscht werden oder es wird neuerlich ein Abschnitt einer µ-split-Fahrbahn befahren. Um auch derartige neuerliche Störeinflüsse in Griff zu bekommen, wird weiterhin vorgeschlagen, dass im jeweils durch diese Störeinflüsse bzw. Randbedingungs-Änderung betroffenen Verfahrensschritt und in den darauf folgenden Verfahrensschritten diese Störeinflüsse bzw. Änderung mit berücksichtigt und dabei durch geeignete Veränderung der Radlängskräfte ausgeglichen werden.

Zumindest theoretisch sind bereits Fzg.-Lenksysteme bekannt, die den Fahrer in der Betätigung des Lenkrades bzw. allgemein seiner Lenkhandhabe unterstützen. Ist ein Fahrzeug, in dem das erfindungsgemäße Verfahren durchgeführt wird, mit einem derartigen Lenksystem ausgestattet, so kann im Sinne einer vorteilhaften Weiterbildung der Fahrer im oben erläuterten dritten Verfahrensschritt, in welchem der Fahrer den zuvor vom Aktuator oder dgl. aufgebrachten Lenkeinschlag zurücknehmen kann, beim Erzeugen eines dementsprechenden Lenkeinschlags durch ein derartiges die Lenkhandhabe des Fahrers einstellendes System zumindest teilweise unterstützt werden. Ggf. kann dann sogar das gesamte erfindungsgemäße Verfahren völlig selbsttätig ablaufen.

Im folgenden wird das erfindungsgemäße Betriebsverfahren nochmals in anderen Worten anhand eines Beispiel-Falles beschrieben, wobei ein Aktuator eines Fzg.-Lenksystems nach dem Oberbegriff des Anspruchs 1 ausfalle, während ein sog. µ-split-Bremsvorgang während einer GeradeausFahrt durchgeführt wird:

Bei einer Fahrt auf einer µ-split-Fahrbahn wirken an der Fahrzeugseite mit hohem Fahrbahnreibwert sehr viel höhere Bremskräfte, als auf der (anderen) Fzg.-Seite mit niedrigem Reibwert zwischen den Fahrzeugrädern und der Fahrbahn. Der Aktuator einer sog. aktiven Lenkung (also bspw. ein sog. Überlagerungs-Aktuator eines Überlagerungs-Lenksystems) stellt dann bei einem Bremsvorgang zur Kompensation der aus diesem Bremsvorgang resultierenden Fahrzeug-Gierreaktion einen sog. Zusatz-Lenkwinkel in Richtung der Fahrbahn mit dem niedrigerem Reibwert ein. Der Fahrer bemerkt hiervon in der Regel nichts, da sein Lenkrad weiterhin in Geradeausstellung verharrt. Ein Ausfall des Aktuators bewirkt nun, dass der unabhängig vom Fahrer eingestellte Zusatz-Lenkwinkel quasi "eingefroren", d.h. beibehalten wird. Bei einer Änderung der Fahrbahnreibwerte oder einer Änderung der Bremskräfte kann dann das Fahrzeug ggf. plötzlich in Richtung der eingeschlagenen Räder fahren.

Zur Abhilfe dieser Problematik wird bzw. wurde hier erfindungsgemäß vorgeschlagen, zunächst das durch den Aktuator-Lenkungseingriff erzeugte sog. Aktuator-Giermoment mit Hilfe des letzten Radwinkel-Sensorsignals bzw. des letzten in einer Steuereinheit abgespeicherten Aktuator-Lenkwinkels und weiteren Fahrzeugdaten und Fahrzustandsdaten zu ermitteln oder zu berechnen, wobei auch auf einen entsprechenden Teil-Lenkwinkel, der letztendlich zurückgenommen werden soll, zurückgegriffen werden kann.

Bei einem sog. "eingefrorenen" Lenkungseingriff bspw. nach rechts wird daraufhin erfindungsgemäß auf der rechten Fahrzeugseite zunächst über eine sofortige Bremskraftreduzierung sowie eine evtl. mögliche Bremskraftsteigerung auf der linken Fahrzeugseite ein das entsprechend dem vorhergehenden Absatz ermittelte Aktuator-Giermoment kompensierendes Gegen-Giermoment an das Fahrzeug angelegt. Die auf das Fahrzeug wirkenden Giermomente heben sich dadurch auf und das Fahrzeug befährt den gewünschten Kurs. Dabei kann es möglicherweise in seltenen Extremsituationen vorkommen, dass aufgrund von ungünstigen Fahrbahnreibwertverhältnissen nicht das erforderliche Gegen-Giermoment erzeugt werden kann. Es kommt dann zu einer Giermomentenänderung und damit einer Kursabweichung, die aber auf das technisch mögliche Maß reduziert ist.

Im weiteren Ablauf des erfindungsgemäßen Betriebsverfahrens wird dann der Bremsdruck auf der rechten Fahrzeugseite wieder erhöht und eventuell auf der linken Fahrzeug-Seite abgesenkt, so dass das durch die dann vorliegenden Bremskraftunterschiede erzeugte Giermoment, das gegenüber dem ursprünglichen Wert des Gegen-Giermoments verringert ist, bevorzugt linear vom Ausgangswert in Höhe des ermittelten Aktuator-Giermoments auf den Wert "Null" abnimmt. Der zeitliche Gradient, mit dem das somit angelegte, fortlaufend verringerte Gegen-Giermoment abnimmt, sollte dabei derart gewählt werden, dass die für den Fahrer des Fahrzeugs feststellbare Giermomentenänderung vom Fahrer noch beherrscht werden kann, und zwar durch eine entsprechende Betätigung des Lenkrads, wobei ausdrücklich auch eine andere als eine lineare Verringerung gewählt werden kann. Als weitere Randbedingung bei diesem Vorgang sollte die Gesamtverzögerung des Fahrzeuges möglichst nahe dem vom Fahrer gewünschten Verzögerungs-Wert kommen.

Wie bereits angedeutet wurde, wird der Fahrer die Reduzierung des Giermomentes aus den unterschiedlichen Bremskräften sowie aufgrund des noch bestehenden vom Aktuator gestellten Radlenkwinkels als eine Kursabweichung nach rechts registrieren und über die Lenkung ausgleichen. Nach Abschluß der Reduzierung des Giermomentes aus den unterschiedlichen Bremskräften ist der von der aktiven Lenkung bzw. vom Aktuator eingestellte Rad-Lenkwinkel vom Fahrer wieder zurückgestellt worden. Eine plötzliche Kursabweichung ist so nicht mehr möglich. Störend für den Fahrer ist nur, daß das Lenkrad einen Schiefstand (nach links) hat und die Verzögerung des Fahrzeuges nicht mit der vom Fahrer über das Bremspedal vorgegebenen Verzögerung übereingestimmt hat. Prinzipbedingt kann die Verzögerung während des soweit beschriebenen Vorgangs niedriger als die vom Fahrer gewünschte und aufgrund der Fahrbahnreibwerte mögliche Verzögerung sein. Um die Zunahme des Bremsweges so klein wie möglich zu halten, sollte der Gradient der Giermomentenänderung so groß wie möglich gewählt werden. Hier kann durch geeignete Abstimmung der Zielkonflikt zwischen Beherrschbarkeit durch den Fahrer und Bremswegzunahme abgewogen werden. Die Bremswegzunahme beschränkt sich jedoch vorteilhafterweise auf den Zeitraum, den der Fahrer im erläuterten dritten Schritt des erfindungsgemäßen Betriebsverfahrens zur Rücknahme des vom Aktuator eingestellten Rad-Lenkwinkels benötigt.

Nach Abschluss der soweit erläuterten Schritte des erfindungsgemäßen Verfahrens kann im übrigen die Bremskraft auf der Hochreibwertseite wieder langsam gesteigert werden. Der Fahrer wird wiederum das Giermoment durch die Bremskräfte selbständig kompensieren. Diese langsame Steigerung der Bremskräfte auf der Hochreibwertseite entspricht der an heutigen Fahrzeugen bereits üblichen Funktion der sogenannten Giermomentenabschwächung, wie sie bei ABS-Systemen realisiert ist. Dabei sei nochmals darauf hingewiesen, dass das jeweils gewünschte Gegen-Giermoment nicht nur über unterschiedliche Bremskräfte, sondern auch über unterschiedliche Antriebskräfte auf der linken und rechten Fahrzeugseite erzeugt werden kann, wobei auch eine geeignete Kombination aus Bremskräften und Antriebskräften möglich ist. Bei einer weiteren Ausführungsform mit einer zusätzlich zur aktiven Lenkung vorhandenen elektrischen Servolenkung oder einer geregelten hydraulischen Servolenkung kann im übrigen ein Moment auf die Lenkung aufgebracht werden, so dass der im dritten Verfahrensschritt des erfindungsgemäßen Betriebsverfahrens beschriebene Ausgleich des Giermomentes über die Lenkung unterstützt bzw. sogar selbsttätig durchführt werden kann. Dieser Vorgang kann hierdurch beschleunigt und für den Fahrer erleichtert werden. Bei einer anderen Ausführungsform kann im übrigen auch eine Optimierung des Verfahrens durch Einbeziehung der Signale eines Gierratensensors erreicht werden.

Schließlich ist ein Fahrzeug-Lenksystem zur Durchführung des erfindungsgemäßen Betriebsverfahrens gekennzeichnet durch eine elektronische Steuereinheit, die die genannte Giermoment-Ermittlung sowie den Aufbau und Abbau des genannten Gegen-Giermoments durch geeignete Ansteuerung geeigneter Stellglieder veranlasst, wobei noch darauf hingewiesen sei, dass durchaus eine Vielzahl von Details auch abweichend von obigen Erläuterungen gestaltet sein können, ohne den Inhalt der Patentansprüche zu verlassen.

## Patentansprüche

1. Betriebsverfahren für ein Lenksystem eines mehrspurigen Fahrzeugs, das unabhängig von einem vom Fahrzeug-Fahrer mit seiner Lenkhandhabe vorgegebenen Lenkwinkel mittels eines Aktuators oder dgl. einen Lenkeinschlag zur Kompensation eines Stör-Giermomentes zeugen kann, das durch unterschiedliche Längskräfte an den Rädern der beiden Fahrzeugseiten, insbesondere einen µ-split-Bremsvorgang, hervorgerufenen wurde, und wobei das Fahrzeug mit einem Bremssystem oder einem Antriebssystem ausgerüstet ist, mit dem durch ein gezieltes Anlegen einer Längskraft an das oder die Fahrzeug-Räder zumindest einer Fahrzeug-Seite ebenfalls ein auf das Fahrzeug einwirkendes Giermoment erzeugbar ist,
**dadurch gekennzeichnet, dass** im Falle eines Ausfalls des Aktuators nach Einleitung eines ein Stör-Giermoment kompensierenden Lenkeinschlages, der bei ausgefallenem Aktuator erhalten bleibt, die folgenden Schritte aufeinanderfolgend durchgeführt werden:
1) es wird das durch den Aktuator vor seinem Ausfall aufgrund des initiierten Lenkeinschlags erzeugte sog. Aktuator-Giermoment berechnet,
2) es wird ein auf das Fahrzeug einwirkendes und dieses Aktuator-Giermoment kompensierendes Gegen-Giermoment durch selbsttätiges Aufbringen einer asymmetrischen Rad-Längskraft erzeugt,
3) das Gegen-Giermoment wird geeignet langsam abgebaut, um dem Fahrer zu ermöglichen, das dann aufgrund des noch vorliegenden Lenkeinschlages auftretende Giermoment durch einen mit seiner Lenkhandhabe erzeugten Lenkeinschlag auszugleichen.

2. Betriebsverfahren nach Anspruch 1, **gekennzeichnet durch** zumindest eines der folgenden Merkmale:
• die jeweils gewünschte Rad-Längskraft wird **durch** Abbremsen oder Beschleunigen des jeweiligen Rades hervorgerufen
• die jeweilige Rad-Längskraft wird an eines oder mehrere Räder einer Fahrzeug-Seite angelegt
• es wird an das oder die Räder der einen Fahrzeug-Seite eine Rad-Längskraft angelegt, die einer ebenfalls zur Durchführung des Verfahrens nach Anspruch 1 an das oder die Räder der anderen Fahrzeug-Seite angelegten Rad-Längskraft entgegengerichtet ist

3. Betriebsverfahren nach Anspruch 1 oder 2,
**dadurch gekennzeichnet, dass** sich während der genannten Verfahrensschritte verändernde Randbedingungen, die das tatsächlich auf das Fahrzeug einwirkende Giermoment beeinflussen, im jeweils durch diese Änderung betroffenen und den darauf folgenden Verfahrensschritten mit berücksichtigt und dabei durch geeignete Veränderung der Radlängskräfte ausgeglichen werden.

4. Betriebsverfahren nach einem der Ansprüche 1 bis 3,
**dadurch gekennzeichnet, dass** der Fahrer beim Erzeugen eines Lenkeinschlags durch ein die Lenkhandhabe des Fahrers einstellendes System zumindest teilweise unterstützt wird.

5. Fahrzeug-Lenksystem zur Durchführung des Betriebsverfahrens nach einem der Ansprüche 1 bis 4,
**gekennzeichnet durch** eine elektronische Steuereinheit, die die genannte Giermoment-Ermittlung sowie den Aufbau und Abbau des genannten Gegen-Giermoments **durch** geeignete Ansteuerung geeigneter Stellglieder veranlasst.

## Claims

1. An operating method for a steering system of a multi-track vehicle which, independently of a steering angle predetermined by a vehicle driver with his steering handle, can generate a steering lock by means of an actuator or the like to compensate a disturbing yaw torque caused by different longitudinal forces on the wheels of the two vehicle sides, in particular a split friction surface braking process, and wherein the vehicle is equipped with a braking system or a drive system with which a yaw torque acting on the vehicle can also be generated by targeted application of a longitudinal force on the vehicle wheel(s) at least on one vehicle side, **characterised in that** in the event of failure of the actuator after introduction of a steering lock which compensates a disturbing yaw torque and is retained when the actuator fails, the following steps are carried out consecutively:
1) the so-called actuator yaw torque generated by the actuator before its failure owing to the initiated steering lock is calculated,
2) a counter-yaw torque acting on the vehicle and compensating this actuator yaw torque is generated by automatic application of an asymmetrical longitudinal wheel force,
3) the counter-yaw torque is slowly eliminated in a suitable manner in order to allow the driver to compensate the yaw torque then occurring owing to the steering lock which is still present by a steering lock generated with his steering handle.

2. An operating method according to claim 1, **characterised by** at least one of the following features:
• the respectively desired longitudinal wheel force is caused by deceleration or acceleration of the respective wheel
• the respective longitudinal wheel force is applied to one or more wheels on a vehicle side
• a longitudinal wheel force which is directed counter to a longitudinal wheel force applied to the wheel(s) of the other vehicle side also to carry out the method according to claim 1, is applied to the wheel(s) of the one vehicle side.

3. An operating method according to claim 1 or 2, **characterised in that** boundary conditions changing during said method steps which influence the yaw torque actually acting on the vehicle are also taken into account in the respective method steps affected by this change and the method steps following thereafter and are compensated in the process by suitable changing of the longitudinal wheel forces.

4. An operating method according to any one of claims 1 to 3, **characterised in that**, on generating a steering lock, the driver is at least partially assisted by a system adjusting the steering handle of the driver.

5. A vehicle steering system for carrying out the operating method according to any one of claims 1 to 4, **characterised by** an electronic control unit which brings about said yaw torque determination and the build up and elimination of said counter-yaw torque by suitable triggering of suitable actuating elements.

## Revendications

1. Procédé de fonctionnement pour un système de direction d'un véhicule à essieux multiples, qui est en mesure de générer, indépendamment d'un angle de direction défini par un conducteur de véhicule avec son volant ou sa manette de direction, à l'aide d'un actionneur ou similaire, un braquage de direction pour compenser un couple de lacet parasite provoqué par des forces longitudinales différentes au niveau des roues des deux côtés de véhicule, notamment par un processus de freinage µ-split, et le véhicule étant équipé d'un système de freinage ou d'un système d'entraînement permettant de générer un couple de lacet également agissant sur le véhicule par application ponctuelle d'une force longitudinale sur la ou les roues de véhicule d'au moins un côté de véhicule,
**caractérisé en ce qu'**
en cas d'une défaillance de l'actionneur, après l'engagement d'un braquage de direction pour compenser un couple de lacet parasite, qui reste maintenu lorsque l'actionneur est défaillant, les étapes suivantes sont réalisées successivement :
1) on calcule le couple de lacet d'actionneur généré par l'actionneur avant sa défaillance suite au braquage de direction initié,
2) on génère, par l'application automatique d'une force longitudinale de roue asymétrique, un couple de lacet opposé agissant sur le véhicule et compensant ce couple de lacet d'actionneur,
3) le couple de lacet opposé est lentement réduit de manière appropriée pour permettre au conducteur de compenser le couple de lacet se produisant en raison du braquage de direction encore présent, par un braquage de direction généré par sa manette de direction.

2. Procédé de fonctionnement selon la revendication 1,
**caractérisé par**
au moins l'une des caractéristiques suivantes :
- la force longitudinale de roue souhaitée est provoquée par freinage ou accélération de la roue respective,
- la force longitudinale de roue respective est appliquée à une ou plusieurs roues d'un côté de véhicule,
- on applique à la ou aux roues d'un côté de véhicule une force longitudinale de roue opposée à une force longitudinale de roue appliquée à la ou aux roues de l'autre côté de véhicule, également pour la mise en oeuvre du procédé selon la revendication 1.

3. Procédé de fonctionnement selon la revendication 1 ou 2,
**caractérisé en ce que**
des conditions marginales variables pendant les étapes de procédé citées influençant le couple de lacet réellement agissant sur le véhicule sont prises en compte dans les étapes de procédé qui suivent et alors compensées par une variation appropriée des forces longitudinales de roue.

4. Procédé de fonctionnement selon l'une quelconque des revendications 1 à 3,
**caractérisé en ce que**
le conducteur, pour générer un braquage de direction, est du moins partiellement assisté par un système réglant le volant ou la manette de direction du conducteur.

5. Système de direction de véhicule pour la mise en oeuvre du procédé de fonctionnement selon l'une quelconque des revendications 1 à 4,
**caractérisé par**
une unité de commande électronique qui initie la détermination du couple de lacet citée ainsi que l'établissement et la réduction du couple de lacet opposé cité, par une commande appropriée d'organes de réglage appropriés.
